(19) Europäisches Patentamt
European Patent Office
Office européen des brevets

(11) Veröffentlichungsnummer: **0 154 247**
**B1**

(12) # EUROPÄISCHE PATENTSCHRIFT

(45) Veröffentlichungstag der Patentschrift: **10.08.88**

(51) Int. Cl.⁴: **B 01 D 13/04**

(21) Anmeldenummer: **85101810.1**

(22) Anmeldetag: **20.02.85**

(54) **Membrane aus Vinylpolymeren und deren Verwendung.**

(30) Priorität: **28.02.84 DE 3407148**

(43) Veröffentlichungstag der Anmeldung:
**11.09.85 Patentblatt 85/37**

(45) Bekanntmachung des Hinweises auf die Patenterteilung:
**10.08.88 Patentblatt 88/32**

(84) Benannte Vertragsstaaten:
**AT BE CH DE FR GB IT LI NL**

(56) Entgegenhaltungen:
**EP-A-0 041 839**
**EP-A-0 082 355**
**US-A-3 223 686**
**US-A-4 424 359**

**MAKROMOLEKULARE CHEMIE, RAPID COMMUNICATION, Band 1, 1980, Seiten 753-758, Basel, CH; H. BOHLEN et al.: "Polymeric schiff base chelates and their precursors. 2. Polymeric Co(salen)s from 2-hydroxy-5-vinylbenzaldehyde and 4,4'-divinylsalen"**

(73) Patentinhaber: **BASF Aktiengesellschaft, Carl-Bosch- Strasse 38, D-6700 Ludwigshafen (DE)**

(72) Erfinder: **Sterzel, Hans- Josef, Dr., Wasgauring 3, D-6701 Dannstadt- Schauerheim (DE)**
Erfinder: **Sanner, Axel, Dr., Lorscher Ring 2c, D-6710 Frankenthal (DE)**
Erfinder: **Neumann, Peter, Dr., Franz- Schubert- Strasse 1, D-6908 Wiesloch (DE)**

EP 0 154 247 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Gegenstand der Erfindung sind Membranen aus Vinylpolymeren, die Sauerstoff übertragende Gruppen enthalten, und deren Verwendung.

Aus Energy Technology (Proceedings of the Energy Technology Conference, Washington) Band 9, 1982, Seiten 505 - 509 sind Membrane, z.B. aus Silikonkautschuk, Polystyrol oder Polyethylmethacrylat bekannt, die eine erhöhte Sauerstoffdurchlässigkeit haben. Es wird dort auch beschrieben, daß der Trennfaktor für Sauerstoff durch Inkorporieren von Sauerstoffüberträgern verbessert wird. Eine geeignete Membrane soll beispielsweise eine Flüssigmembran sein, die auf eine mikroporöse Polymermembran aufgetragen ist und einen Sauerstoffüberträger gelöst enthält. Ein Nachteil solcher Membranen ist die kurze Lebensdauer von nur wenigen Monaten und die nicht ausreichende Permeabilität für Sauerstoff.

Aus Makromolekulare Chemie Rapid Commun., Band 1, 1980, Seiten 753 - 758 sind auch schon Vinylpolymere bekannt, die Co(salen)-Gruppen an die Polymerkette gebunden enthalten. Es wird lediglich erwähnt, daß solche Polymere in der Lage sind, Sauerstoff zu binden.

Es war deshalb die technische Aufgabe gestellt, Membranen zur Verfügung zu stellen, die eine hervorragende Permeabilität für Sauerstoff haben, einen guten Trennfaktor aufweisen und eine höhere Lebensdauer haben.

Diese Aufgabe wird gelöst durch Membrane aus Vinylpolymeren mit Einheiten, die Gruppen der Formel

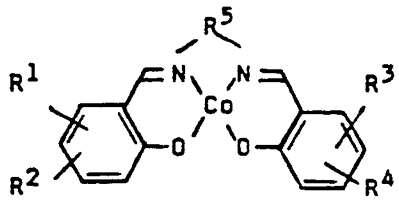

I,

in der $R^1$, $R^2$, $R^3$ und $R^4$ jeweils ein Wasserstoffatom, eine Methylgruppe, eine Methoxygruppe, ein Fluoratom oder eine Trifluormethylgruppe bezeichnen und $R^5$ den Rest $-CH_2-CH_2-$ oder

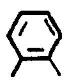

bedeutet, kovalent an die Polymerkette gebunden enthalten.

Ferner ist ein Gegenstand der Erfindung die Verwendung solcher Membrane zur Abtrennung von molekularem Sauerstoff aus solchen enthaltenden Gasen.

Die neuen Membranen zeichnen sich dadurch aus, daß sie Sauerstoff übertragende Gruppen nicht mehr gelöst, sonderen chemisch gebunden enthalten. Darüber hinaus zeichnen sich die neuen Membranen dadurch aus, daß sie eine gute Permeabilität für Sauerstoff und einen höheren Trennfaktor aufweisen. Schließlich haben die neuen Membranen eine erhöhte Lebensdauer.

Die erfindungsgemäßen Membrane sind aufgebaut aus Vinylpolymeren, von denen vorzugsweise mindestens 10 % der Vinyleinheiten die Gruppe der Formel I

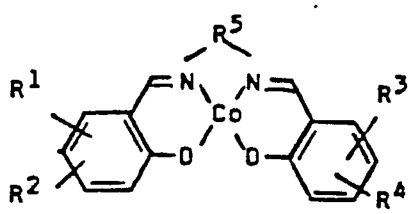

I,

in der $R^1$, $R^2$, $R^3$ und $R^4$ jeweils ein Wasserstoffatom, eine Methylgruppe, eine Methoxygruppe, ein Fluoratom oder eine Trifluormethylgruppe bezeichnen und $R^5$ den Rest $-CH_2-CH_2-$ oder

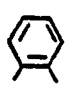

bedeutet, kovalent an die Polymerkette gebunden enthalten. Als Vinylpolymere sind alle diejenigen geeignet, die miteinander Copolymere bilden.

Bevorzugte Membrane sind aufgebaut aus

a) 10 bis 90 Mol.-%-Einheiten der Formel

$$\begin{array}{l} CH_2{=}CH \\ \;| \\ A \end{array} \qquad II,$$

in der A einen Co(salen)-Rest der Formel I bezeichnet,

b) 10 bis 90 Mol.-%-Einheiten, die sich von Vinylpyridinen ableiten und gegebenenfalls

c) 0 bis 80 Mol.-%-Einheiten, die sich von Vinylmonomeren ableiten, die mit a) und b) copolymerisierbar sind.

Besonders bevorzugte Membrane sind aufgebaut aus 20 bis 70 Mol.-% a), 20 bis 70 Mol.-% b) und 0 bis 20 Mol.-% c). Besonders bevorzugte Monomere, von denen sich die Einheiten a) ableiten, sind solche der Formel II, in denen in der Co(salen)-Gruppe A die Substituenten $R^1$, $R^2$, $R^3$ und $R^4$ Wasserstoff bezeichnen. Geeignete Vinylpyridine als Komponente b) sind beispielsweise Vinylpyridine, die 1 oder 2 Methyl- oder Methoxygruppen als Substituenten enthalten können. Besonders bevorzugt werden 2- und 4-Vinylpyridin. Als Komponente c) wird bevorzugt Styrol oder Methylstyrol, insbesondere Styrol verwendet.

Die Polymeren lassen sich nach bekannten Verfahren, wie sie beispielsweise in Makromolekulare Chemie Rapid Commun., Band 1, 1980, Seiten 753 - 758 beschrieben sind, durch radikalische Polymerisation herstellen.

Aus Polymeren der obengenannten Zusammensetzung erhält man Membranen vorteilhaft durch Lösen der Polymeren in geeigneten polaren Lösungsmitteln, wie Tetrahydrofuran, Dimethylformamid, N-Methylpyrrolidon, Pyridin oder Dimethylsulfon und Gießen dieser Lösung zu Filmen und Verdampfen des Lösungsmittels. Vorteilhaft sind die Folien auf mikroporösen Membranen, die als Mikrofiltrationsmembranen bekannt sind, z. B. aus Polyethylen, Polypropylen oder Polytetrafluorethylen, aufgebracht. Diese Trägermembrane können flächig in Plattenmodulen oder Spiralmodulen sowie als Hohlfasern in Hohlfasermodulen ausgebildet sein. Die Dicke der erfindungsgemäßen Membranen beträgt in der Regel 0,1 bis 100 µm.

Die erfindungsgemäßen Membranen eignen sich zur Abtrennung von molekularem Sauerstoff aus solchen enthaltenden Gasen, insbesondere zur Abtrennung von molekularem Sauerstoff aus Luft oder zur Anreicherung von Luft mit molekularem Sauerstoff, z. B. für die Befeuerung von Schmelzöfen, die Begasung von Kläranlagen oder die Begasung von Fermentationsvorgängen.

Die erfindungsgemäßen Membranen eignen sich auch als Kathoden in Brennstoffzellen, die mit Luft bzw. molekularem Sauerstoff als Oxidationsmittel arbeiten. An der Kathode nimmt der Luftsauerstoff Elektronen auf und geht als OH-Ion in Lösung. Der Nachteil bisheriger Luftkathoden liegt darin, daß sie nur schwer zu kontrollierende Dreiphasensysteme sind. In dem festen, porösen Kathodenmaterial der bisherigen Luftkathoden muß der Gasdruck von der Gasseite genau dem Flüssigkeitsdruck auf der Elektrolytseite entsprechen um zu verhindern, daß entweder Luft in den Elektrolyten oder Elektrolyt in den Gasraum eindringt. Beides ist von großem Nachteil. In jüngster Zeit wurde deshalb auch schon begonnen, nichtporöse Luftkathoden zu entwickeln, die Katalysatoren enthalten. Hierbei erzielt man Stromdichten von ca. 3 bis 10 $mA/cm^2$, unabhängig von der Art des Katalysators. Die Stromdichte wird jedoch durch die viel zu geringe Sauerstoffpermeabilität der Polymeren begrenzt. Dieser Nachteil wird durch die erfindungsgemäßen Membranen behoben. In Kombination mit einer perfluorierten Kationenaustauschermembrane als festem Elektrolyten und einer geeigneten folienförmigen Anode ergeben sich somit Brennstoffzellen, die nur aus Membranen bestehen, die somit eine sehr hohe Leistung, bezogen auf Volumen und Gewicht, aufweisen.

Der Gegenstand der Erfindung sei an folgenden Beispielen veranschaulicht.

**Beispiel 1**

Herstellung des Polymeren

2-Hydroxy-5-vinylbenzaldehyd wurde nach Wulff et al (Makromolekulare Chemie, 179, 1979, Seite 2647) durch Chlormethylierung von Salicylaldehyd, Umsetzen des 5-Chlormethylsalicylaldehyds mit Triphenylphosphin und Umwandlung des Phosphoniumsalzes zu der obengenannten Verbindung hergestellt.

1. Zu einer Lösung von 74 g (0,5 Mol) 2-Hydroxy-5-vinylbenzaldehyd in 750 ml Toluol wurden 74 g (1 Mol) Butylamin gegeben und diese Mischung 2 Stunden unter Rückfluß gekocht. Nach zweimaliger Extraktion mit jeweils 500 ml Eiswasser wurde das Toluol abdestilliert. Es wurden 80 g (79 %) 2-Butyliminomethyl-4-vinylphenol als gelbes Öl erhalten.
2. 80 g 2-Butyliminomethyl-4-vinylphenol, 42 g 4-Vinylpyridin und 21 g Styrol wurden in 1200 ml Ethylbenzol gelöst und diese Mischung auf 80° C erwärmt und dann 100 mg 2,2'-Azoisobutyronitril zugegeben und unter Stickstoff 24 h gerührt. Das Polymere wurde durch Ausfällen mit Methanol gewonnen. Durch nochmaliges Auflösen in Dimethylformamid und Ausfällen in Methanol erhielt man 122 g (85 %) eines gelblichen Polymeren.
3. 20 g des so erhaltenen Polymeren wurden in einer Mischung aus 400 ml Wasser, 400 ml Ethanol und 80 ml Schwefelsäure 3 h am Rückfluß gekocht, um das als Schutzgruppe wirkende Butylamin abzuspalten. Es wurden 16,8 g eines Polymeren zurückgewonnen.

4. 60 g des copolymeren Aldehyds wurden mit 20 ml Ethylendiamin in 300 ml Toluol 24 h am Rückfluß gekocht. Die polymere Schiff'sche Base in Methanol gefällt, abfiltriert und im Vakuum getrocknet. Es wurden 18,3 g der polymeren Schiff'schen Base erhalten.
5. 18,0 g der polymeren Schiff'schen Base wurden in 300 ml Toluol gelöst. Nach Zugabe von 10 g Salicylaldehyd wurde die Mischung 24 h unter Rückfluß gekocht. Das ausgefällte gelbe Polymere wurde mit Methanol extrahiert. Es wurden 19,3 g des Polymeren erhalten.
6. Eine Mischung aus 19 g des Polymeren aus Stufe 5 und 14 g Kobalt-(II)-acetat.4 $H_2O$ wurde in 700 ml sauerstoffreiem Dimethylformamid 24 h auf 80°C erhitzt. Das so erhaltene Koordinationspolymere wurde mit Ethanol unter Stickstoff extrahiert. Die Ausbeute betrug 17,6 g.

Herstellung der Membranen

0,5 g des in Stufe 6 erhaltenen Polymeren wurden in 50 ml Pyridin unter Ausschluß von molekularem Sauerstoff gelöst. In diese Lösung wurde eine mikroporöse Polyethylen-Mikrofiltrationsmembran als Träger eingetaucht (Celgard®K 801 der Fa. Celanese). Nachdem die überflüssige Lösung entfernt wurde, wurde die Membrane langsam unter Stickstoff getrocknet. Beim Herausnehmen aus der Membrane aus der Schutzgasatmosphäre wechselte die Farbe innerhalb einer 1/2 Minute von braun/gelb nach tief rot bis schwarz, ein Zeichen für die schnelle Sauerstoffaufnahme aus der Luft.

Aus der Gewichtszunahme im Vergleich zur unbehandelten Trägermembran ergab sich, daß ca. 100 $cm^2$ Trägerfläche mit etwa 120 mg Polymeren belegt waren. Dies ergibt eine mittlere Schichtdicke von ca. 10 µm.

Verwendung der Membrane zum Abtrennen von molekularem Sauerstoff

Die so hergestellte Membrane wurde druckdicht in eine Testkammer eingespannt, wobei als Stütze eine großporige Glassinterscheibe diente. An der offenen Außenfläche wurde getrocknete, ölfreie Luft mit einer Temperatur von 30 - 35°C vorbeibewegt. An der Gegenseite wurde Luft abgepumpt und die Menge und Konzentration des durchströmenden Sauerstoffs gemessen. Dazu darf der Druck auf der Saugseite maximal 60 mbar betragen. Nach Abzug der Trägerfläche (ca 40 %) wies die Membran für Sauerstoff eine Permeabilität von ca. = $6{,}56.10^4$ und $26{,}24.10^4$ $cm^3/m^2.d.bar$ (1-4 x $10^6$ $cm^3/cm^2.s.cm$ Hg) auf. Der Trennfaktor Sauerstoff/Stickstoff war größer als 1.000. Die Permeabilität hängt von den Herstellbedingungen ab und liegt zwischen = $6{,}56.10^4$ und $32{,}8.10^4$ $cm^3/m^2.d.bar$ ($1.10^{-6}$ und $5.10^{-6}$ $cm^3/cm^2.s.cm$ Hg).

Ähnlich gute Ergebnisse erzielt man mit Membranen aus abgeänderten Polymerzusammensetzungen.

**Patentansprüche**

1. Membrane aus Vinylpolymeren mit Einheiten, die Gruppen der Formel

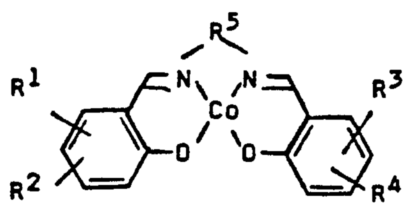 I,

in der $R^1$, $R^2$, $R^3$ und $R^4$ jeweils für ein Wasserstoffatom, eine Methylgruppe, eine Methoxygruppe, ein Fluoratom oder eine Trifluormethylgruppe stehen und $R^5$ den Rest $CH_2$-$CH_2$- oder

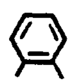

bedeutet,

kovalent an die Polymerkette gebunden enthalten.

2. Membrane nach Anspruch 1, dadurch gekennzeichnet, daß sie aufgebaut sind aus

a) 10 bis 90 Mol.-%-Einheiten, die sich von Monomeren der Formel II

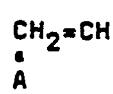 II,

in der A einen Co(salen)-Rest der Formel I bezeichnet, ableiten

b) 10 bis 90 Mol.-%-Einheiten, die sich von Vinylpyridinen ableiten und gegebenenfalls

c) 0 bis 80 Mol.-%-Einheiten, die sich von Vinylmonomeren ableiten, die mit a) und b) copolymerisierbar sind.

3. Membrane nach den Ansprüchen 1 und 2, dadurch gekennzeichnet, daß die Komponenten b) sich von Vinylpyridin und die Komponenten c) von Styrol ableiten.

4. Membrane nach den Ansprüchen 1 bis 3, <u>dadurch gekennzeichnet,</u> daß sie auf mikroporöse Trägermembrane aufgebracht sind.

5. Verwendung der Membrane nach den Ansprüchen 1 bis 4 für die Abtrennung von molekularem Sauerstoff aus solchen enthaltenden Gasen.

6. Verwendung von Membranen nach den Ansprüchen 1 bis 4 als Kathoden in Brennstoffzellen.

## Claims

1. A membrane of a vinyl polymer comprising units which contain groups of the formula

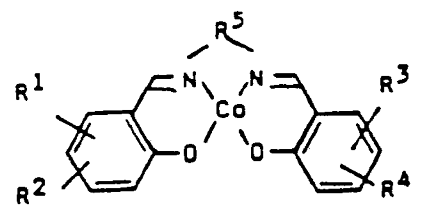 I

where $R^1$, $R^2$, $R^3$ and $R^4$ are each hydrogen, methyl, methoxy, fluorine or trifluoromethyl and $R^5$ is $-CH_2-CH_2-$ or

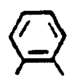 ,

covalently bonded to the polymer chain.

2. A membrane as claimed in claim 1, which is composed of

a) from 10 to 90 mole % of units derived from monomers of the formula II

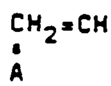 II

where A is a Co(salene) radical of the formula I and

b) from 10 to 90 mole % of units which are derived from vinylpyridines, with or without

c) from 0 to 80 mole % of units which are derived from vinyl monomers which are copolymerizable with a) and b).

3. A membrane as claimed in claims 1 and 2, wherein component b) is derived from vinylpyridine and component c) is derived from styrene.

4. A membrane as claimed in any of claims 1 to 3, which has been mounted on a microporous carrier membrane.

5. Use of a membrane as claimed in any of claims 1 to 4 for separating molecular oxygen out of gases in which it is present.

6. Use of a membrane as claimed in any of claims 1 to 4 as a cathode in a fuel cell.

## Revendications

1. Membranes de polymères de vinyle à motifs contenant, liés, covalents, à la chaîne polymère, des groupes de formule

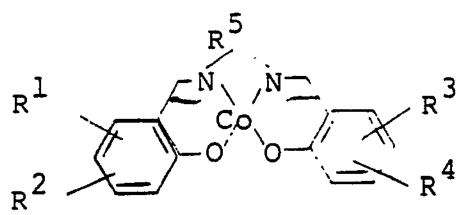 I,

dans laquelle $R^1$, $R^2$, $R^3$ et $R^4$ représentent, chacun, un atome d'hydrogène, un groupe méthyle, un groupe methoxy, un atome de fluor ou un groupe trifluoromethyle et $R^5$ le reste $-CH_2-CH_2-$ ou

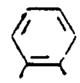

2. Membranes selon la revendication 1, caractérisées par le fait qu'elles sont constituées de

a) 10 à 90 moles % de motifs qui dérivent de monomères de formule II

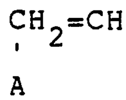

II,

dans laquelle A désigne un reste Co (salen) de formule I

b) 10 à 90 moles % de motifs qui dérivent de vinylpyridines et eventuellement

c) 0 à 80 moles % de motifs qui dérivent de monomères vinyliques qui sont copolymérisables avec a) et b).

3. Membranes selon les revendications 1 et 2, caractérisées par le fait que les composants b) dérivent de vinylpyridine et les composants c) de styrène.

4. Membranes selon les revendications 1 à 3, caractérisées par le fait qu'elles sont appliquées sur les membranes supports microporeuses.

5. Utilisation des membranes selon les revendications 1 à 4 pour séparer l'oxygène moléculaire de gaz qui en contiennent.

6. Utilisation de membranes selon les revendications 1 à 4 comme cathodes dans des cellules de combustible.